(19)

Europäisches
Patentamt
European
Patent Office
Office européen
des brevets

(11) **EP 4 336 405 A1**

(12) **EUROPEAN PATENT APPLICATION**
published in accordance with Art. 153(4) EPC

(43) Date of publication:
**13.03.2024 Bulletin 2024/11**

(21) Application number: **21818964.5**

(22) Date of filing: **18.03.2021**

(51) International Patent Classification (IPC):
**G06K 9/26** (2006.01)

(52) Cooperative Patent Classification (CPC):
**G06F 18/00**

(86) International application number:
**PCT/CN2021/081443**

(87) International publication number:
**WO 2021/244105 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2020 CN 202010495612**

(71) Applicant: **Sangfor Technologies Inc.
Shenzhen, Guangdong 518055 (CN)**

(72) Inventor: **GUO, Kai
Shenzhen, Guangdong 518055 (CN)**

(74) Representative: **Müller Schupfner & Partner
Patent- und Rechtsanwaltspartnerschaft mbB
Bavariaring 11
80336 München (DE)**

(54) **FEATURE VECTOR DIMENSION COMPRESSION METHOD AND APPARATUS, AND DEVICE AND MEDIUM**

(57)   A feature vector dimension compression method and apparatus, and a device and a medium. The method comprises: acquiring a training sample; training a pre-built classification model by using the training sample, so as to obtain a false positive sample and a positive sample; respectively determining a first important feature dimension of the false positive sample and a second important feature dimension of the positive sample; and determining a dimension-compressed training sample by using the first important feature dimension, the second important feature dimension and the training sample.
Therefore, redundant features can be deleted, such that the processing speed of feature vectors is increased. In addition, after an interference feature is deleted, a classification model is trained by using a compressed feature vector, such that the false positive probability of the classification model can be reduced and the importance of a key feature can be improved, thereby improving the sensitivity of the classification model to a black sample and improving the detection rate of malicious files by the classification model.

Figure 1

## Description

This application claims the priority to Chinese Patent Application No. 202010495612.8, titled "FEATURE VECTOR DIMENSION COMPRESSION METHOD AND APPARATUS, AND DEVICE AND MEDIUM", filed on June 03, 2020 with the China National Intellectual Property Administration (CNIPA), which is incorporated herein by reference in its entirety.

## FIELD

The present disclosure relates to the technical field of information, and in particular to a method, an apparatus and a device for compressing feature vector dimensionality, and a medium.

## BACKGROUND

Dimensionality reduction is a method for pre-processing high-dimensional feature data, and is a widely used data preprocessing method. The dimensionality reduction is used to retain some important features of high-dimensional data, and remove noise and unimportant features of the high-dimensional data, to improve data processing speed. In actual production and application, the dimensionality reduction may save a lot of time and cost while losing some information. Principal Component Analysis (PCA) is a data dimensionality reduction algorithm widely used in the conventional technology, in which principal components are analyzed to achieve optimal comprehensive simplification of multiple variables, i.e., achieve dimensionality reduction of high-dimensional variable space, under a principle of minimum loss of data information. Linear Discriminant Analysis (LDA) is another classic dimensionality reduction algorithm. LDA is a dimensionality reduction algorithm based on supervised learning. That is, LDA is different from PCA in that each sample in the dataset has a category output. PCA is an unsupervised dimensionality reduction algorithm without considering the category output of the sample. LDA and PCA have problems such as resulting in poor interpretability and increased performance loss. Poor interpretability indicates the case that the features acquired after the dimensionality reduction based on the conventional dimensionality reduction algorithm has no interpretability. The increased performance loss is incurred because the conventional dimensionality reduction algorithms involve many matrix operations and are not lightweight solutions, resulting in a lot of performance losses. In addition, most dimensionality reduction algorithms only aim to optimize feature space without considering a feature of a classification model, resulting in poor effect of dimensionality reduction.

## SUMMARY

In view of the above, a method, an apparatus and a device for compressing feature vector dimensionality, and a medium are provided according to the present disclosure, to delete a redundant feature and improve a processing speed of a feature vector. Moreover, after the interference feature is deleted, a classification model is trained by using a compressed feature vector, which can reduce a misreport rate of the classification model, and improve an importance of a key feature, so as to improve the sensitivity of the classification model to a black sample and improve a detection rate of the classification model to malicious files. Further, the compressed feature vector has good interpretability, so as to reduce performance loss, thus improving the effect of the dimensionality reduction. The technical solutions are as follows.

In a first aspect, a method for compressing feature vector dimensionality is provided according to the present disclosure, and the method includes:

acquiring training samples;

training a pre-constructed classification model based on the training samples, to acquire misreported samples and accurately-detected samples;

determining a first critical feature dimension of the misreported samples and a second critical feature dimension of the accurately-detected samples; and

determining dimensionality-compressed training samples based on the first critical feature dimension, the second critical feature dimension and the training samples.

In an embodiment, the determining dimensionality-compressed training samples based on the first critical feature dimension, the second critical feature dimension and the training samples includes:
deleting data on the first critical feature dimension from the training samples, and retaining data on the second critical feature dimension, to acquire dimensionality-compressed training samples.

In an embodiment, the determining a first critical feature dimension of the misreported samples includes:

determining a target critical parameter of each feature dimension of the misreported samples according to a predetermined equation, where the target critical parameter is used to indicate an importance of each feature dimension to the misreported samples; and

determining the first critical feature dimension of the misreported samples based on the target critical parameters.

In an embodiment, the determining a target critical parameter of each feature dimension of the misreported samples according to a predetermined equation includes:

determining a local critical parameter of each feature dimension for each of the misreported samples according to a first predetermined equation, where the local critical parameter is used to indicate an importance of each feature dimension to a current sample, and the first predetermined equation is expressed as:

$$f_{m,i} = \sum split(i)$$

where $f_{m,i}$ represents a local critical parameter of an $i$-th feature dimension in an $m$-th sample, and $\sum split(i)$ represents the number of times that the $i$-th feature dimension in the $m$-th sample is used to separate a decision tree; and

determining the target critical parameter of each feature dimension of the misreported samples according to a second predetermined equation and the local critical parameters, where the second predetermined equation is expressed as:

$$F_i = \frac{\sum_{m=1}^{N} f_{m,i}}{N}$$

where $F_i$ represents a target critical parameter of the $i$-th feature dimension in the misreported samples, and $N$ represents the number of the misreported samples.

In an embodiment, the determining the first critical feature dimension of the misreported samples based on the target critical parameters includes:

comparing the target critical parameter of each feature dimension of the misreported samples with a predetermined critical parameter threshold; and

determining a current feature dimension as the first critical feature dimension, in a case that a target critical parameter of the current feature dimension is greater than or equal to the predetermined critical parameter threshold.

In an embodiment, after the determining dimensionality-compressed training samples based on the first critical feature dimension, the second critical feature dimension and the training samples, the method further includes:
training the classification model based on the dimensionality-compressed training samples to acquire a trained classification model.
In an embodiment, after the training the classification model based on the dimensionality-compressed training samples to acquire a trained classification model, the method further includes:

acquiring test samples; and

evaluating the trained classification model based on the test samples until a predetermined condition is met, to acquire a target classification model.

In a second aspect, an apparatus for compressing feature vector dimensionality is provided according to the present disclosure, and the apparatus includes:

a sample acquiring module, configured to acquire training samples;

a model training module, configured to train a pre-constructed classification model based on the training samples to acquire misreported samples and accurately-detected samples;

a critical feature dimension determining module, configured to determine a first critical feature dimension of the misreported samples and a second critical feature dimension of the accurately-detected samples; and

a dimension compressing module, configured to determine dimensionality-compressed training samples based on the first critical feature dimension, the second critical feature dimension and the training samples.

In a third aspect, a device for compressing feature vector dimensionality is provided according to the present disclosure, and the device includes a memory and a processor. The memory is configured to store a computer program. The processor is configured to, when executing the computer program, implement the method for compressing feature vector dimensionality described above.
In a fourth aspect, a computer-readable storage medium is provided according to the present disclosure. The computer-readable storage medium is used to store a computer program, where the computer program, when executed by a processor, implements the method for compressing feature vector dimensionality described above.
It can be seen that according to the present disclosure, the training samples are first acquired, the pre-constructed classification model is trained with the training samples to acquire the misreported samples and the accurately-detected samples, the first critical feature dimension of the misreported samples and the second critical feature dimension of the accurately-detected samples are determined, and then the dimensionality-compressed training samples are determined based on the first critical feature dimension, the second critical feature dimension and the training samples. It can be seen that according to the present disclosure, after the training samples are acquired, the pre-constructed classification model is trained with the training samples to acquire the misreported samples and the accurately-detected samples. The first critical feature dimension of the misreported samples and the second critical feature dimension of the accurately-detected samples are determined, and then the dimensionality-compressed training samples are determined based on the first critical feature dimension, the second critical feature dimension and the training samples, so that redundant features can be deleted, so as to improve feature vector processing speed. Moreover, after the interference features are deleted, the classification model is trained with the compressed feature vectors, so that a misreport rate of the classification model can be reduced, and importance of key feature can be improved, so as to improve the sensitivity of the classification model to black samples and detection rate of the classification model to malicious files. Further, the compressed feature vector has good interpretability, so as to reduce performance loss, thus improving the effect of the dimensionality reduction.

## BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.

Figure 1 is a flow chart of a method for compressing feature vector dimensionality according to an embodiment of the present disclosure;

Figure 2 is a flow chart of a method for compressing feature vector dimensionality according to an embodiment of the present disclosure;

Figure 3 is a flow chart of a method for compressing feature vector dimensionality according to an embodiment of the present disclosure;

Figure 4 is a schematic structural diagram of an apparatus for compressing feature vector dimensionality according to an embodiment of the present disclosure; and

Figure 5 is a schematic structural diagram of a device for compressing feature vector dimensionality according to an embodiment of the present disclosure.

## DETAILED DESCRIPTION

Technical solutions in the embodiments of the present disclosure are clearly and completely described below in conjunction with the drawings of the embodiments of the present disclosure. Apparently, the embodiments described in the following are only some embodiments of the present disclosure, rather than all of the embodiments. Any other embodiments obtained by those skilled in the art based on the embodiments in the present disclosure without any creative efforts fall within the protection scope of the present disclosure.

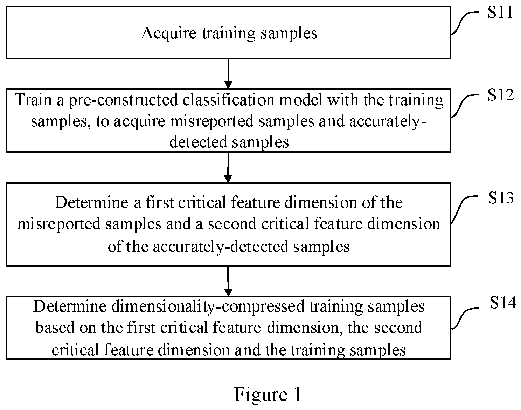

As shown in Figure 1, a method for compressing feature vector dimensionality is provided according to an embodiment of the present disclosure. The method includes the following steps S11 to S14.

In step S 11, training samples are acquired.

In an implementation process, the training samples are acquired, to train a pre-constructed classification model with the acquired training samples, and then a to-be-compressed feature dimension is determined according to a training result.

In step S12, the pre-constructed classification model is trained with the training samples, to acquire misreported samples and accurately-detected samples.

It is understood that after the training samples are acquired, the pre-constructed classification model is trained with the training samples, to acquire the misreported samples and the accurately-detected samples. Specifically, the training samples are inputted into the pre-constructed classification model, and the classification model may divide the samples as different types, and the accurately-detected samples and the misreported samples may be determined according to a classification result. For example, the samples are portable executable (PE) files. The pre-constructed classification model may classify the PE files as normal PE files and virus PE files. True normal PE files among the classified normal PE files and true virus PE files among the classified virus PE files are determined as the accurately-detected samples. PE files that are not normal PE files while being classified as normal PE files, and PE files that are not virus PE files while being classified as virus PE files, are determined as the misreported samples. The PE file is an executable file defined on the Microsoft operating system, such as EXE, DLL, OCX, SYS and COM files. In the actual application, the training samples are first represented by feature vectors, and then the training samples represented by feature vectors are inputted into the pre-constructed classification model. A feature vector is a feature expression corresponding to original features, for example, a character string "apple" and a character string "orange" are respectively represented as a feature vector [1,0] and a feature vector [0,1] by one-hot encoding. The one-hot encoding is also known as one-bit valid encoding, mainly uses an N-bit status register to encode N strings. Each string has an independent register bit and only one bit is valid at any time. The one-hot encoding is the representation of a categorical variable as a binary vector, in which a categorical value is first mapped to an integer value, and then each integer value is represented as the binary vector that is all 0 except for an index of the integer marked as 1.

In step S13, a first critical feature dimension of the misreported samples and a second critical feature dimension of the accurately-detected samples are determined.

After the misreported samples and the accurately-detected samples are determined, the first critical feature dimension of the misreported samples and the second critical feature dimension of the accurately-detected samples are determined. That is, the critical feature dimension of the misreported samples and the critical feature dimension of the accurately-detected samples are determined, so as to determine the to-be-compressed feature dimension.

In step S14, dimensionality-compressed training samples are determined based on the first critical feature dimension, the second critical feature dimension and the training samples.

After the first critical feature dimension, the second critical feature dimension and the training samples are determined, the dimensionality-compressed training samples may be determined based on the first critical feature dimension, the second critical feature dimension and the training samples. Specifically, after the first critical feature dimension and the second critical feature dimension are determined, the to-be-compressed feature dimension may be determined, for performing feature dimension compression.

It can be seen that according to the present disclosure, the training samples are first acquired, the pre-constructed classification model is trained with the training samples to acquire the misreported samples and the accurately-detected samples, the first critical feature dimension of the misreported samples and the second critical feature dimension of the accurately-detected samples are determined, and then the dimensionality-compressed training samples are determined based on the first critical feature dimension, the second critical feature dimension and the training samples. It can be seen that according to the present disclosure, after the training samples are acquired, the pre-constructed classification model is trained with the training samples to acquire the misreported samples and the accurately-detected samples. The first critical feature dimension of the misreported samples and the second critical feature dimension of the accurately-detected samples are determined, and then the dimensionality-compressed training samples are determined based on the first critical feature dimension, the second critical feature dimension and the training samples, so that redundant features can be deleted, so as to improve feature vector processing speed. Moreover, after the interference features are deleted, the classification model is trained with the compressed feature vectors, so that a misreport rate of the classification model can be reduced, and importance of key feature can be improved, so as to improve the sensitivity of the classification model to black samples and detection rate of the classification model to malicious files. Further, the compressed feature vector has good interpretability, so as to reduce performance loss, thus improving the effect of the dimensionality reduction.

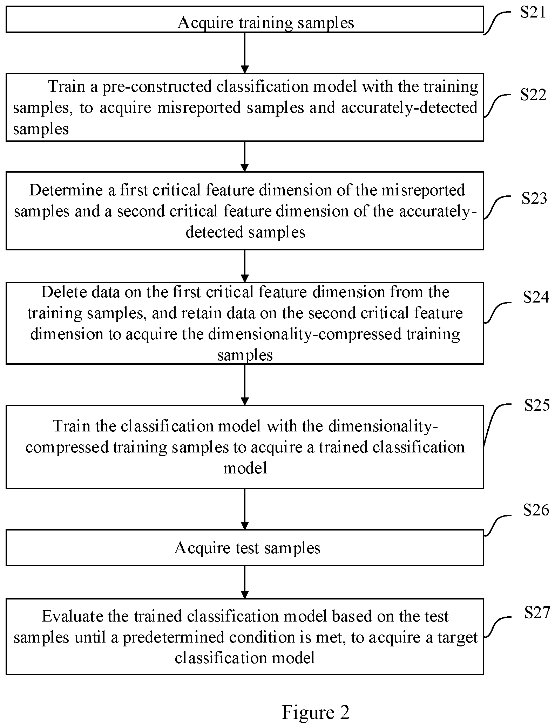

As shown in Figure 2, a method for compressing feature vector dimensionality is provided according to an embodiment of the present disclosure. The method includes the following steps S21 to S27.

In step S21, training samples are acquired.

In step S22, the pre-constructed classification model is trained with the training samples, to acquire misreported samples and accurately-detected samples.

For a specific implementation of the steps S21 and S22, reference may be made to corresponding content disclosed in the embodiments described above, and details are not described herein.

In step S23, a first critical feature dimension of the misreported samples and a second critical feature dimension of the accurately-detected samples are determined.

After the misreported samples and the accurately-detected samples are determined, the first critical feature dimension of the misreported samples and the second critical feature dimension of the accurately-detected samples are determined. Specifically, the determining the first critical feature dimension of the misreported samples includes: determining a target critical parameter of each feature dimension of the misreported samples according to a predetermined equation; and determining the first critical feature dimension of the misreported samples based on the target critical parameters, where the target critical parameter is used to indicate an importance of each feature dimension to the whole of the misreported samples.

In the specific implementation process, the determining a target critical parameter of each feature dimension of the misreported samples according to a predetermined equation includes:

determining a local critical parameter of each feature dimension for each of the misreported samples according to a first predetermined equation, where the local critical parameter is used to indicate an importance of each feature dimension to a current sample, and the first predetermined equation is expressed as:

$$f_{m,i} = \sum split(i)$$

where $f_{m,i}$ represents a local critical parameter of an $i$-th feature dimension in an $m$-th sample, and $\Sigma split(i)$ represents the number of times that the $i$-th feature dimension in the $m$-th sample is used to separate a decision tree; and

determining the target critical parameter of each feature dimension of the misreported samples according to a second predetermined equation and the local critical parameters, where the second predetermined equation is expressed as:

$$F_i = \frac{\sum_{m=1}^{N} f_{m,i}}{N}$$

where $F_i$ represents the target critical parameter of the $i$-th feature dimension in the misreported samples, and N represents the number of the misreported samples. Similarly, the determining the second critical feature dimension of the accurately-detected samples according to the predetermined equation includes: determining a target critical parameter of each feature dimension of the accurately-detected samples according to the predetermined equation; and determining the second critical feature dimension of the accurately-detected samples based on the target critical parameter of each feature dimension of the accurately-detected samples.

After the target critical parameter of each feature dimension of the misreported samples is determined according to the predetermined equation, the method further includes: determining the first critical feature dimension of the misreported samples based on the target critical parameters. Specifically, the determining the first critical feature dimension of the misreported samples based on the target critical parameters includes: comparing the target critical parameter of each feature dimension of the misreported samples with a predetermined critical parameter threshold; and determining a current feature dimension as the first critical feature dimension in a case that a target critical parameter of the current feature dimension is greater than or equal to the predetermined critical parameter threshold.

In step S24, data of the first critical feature dimension is deleted from the training samples, and data of the second critical feature dimension is retained to acquire the dimensionality-compressed training samples.

Once the first critical feature dimension and the second critical feature dimension are determined, a feature dimension that mainly affects the misreported samples and a feature dimension that mainly affects the accurately-detected samples are determined. The data on the first critical feature dimension is deleted from the training sample, and the data on the second critical feature dimension is retained to acquire the dimensionality-compressed training samples.

In another embodiment, the determining the dimensionality-compressed training samples based on the first critical feature dimension, the second critical feature dimension and the training samples includes: deleting the data of the first critical feature dimension from the training samples, and retaining the data of the second critical feature dimension; and weighting the data of the second critical feature dimension to acquire the dimensionality-compressed training samples. For example, assuming that the second critical feature dimension includes a feature dimension 1, a feature dimension 2, and a feature dimension 3, and the feature dimension 1, the feature dimension 2, and the feature dimension 3 are ranked according to a descending order of respective target critical parameters as: the feature dimension 1>the feature dimension 2>the feature dimension 3, then data on the feature dimension 1 is retained and multiplied by a weightage 10, the data on the feature dimension 2 is retained and multiplied by a weightage 6, and the data on the feature dimension 3 is retained and multiplied by a weightage 4, to acquire the dimensionality-compressed training samples. In this way, the dimensions important to the accurately-detected samples are emphasized and the detection rate is improved.

In step S25, the classification model is trained with the dimensionality-compressed training samples to acquire a trained classification model.

After acquiring the compressed training samples, the classification model is trained with the compressed training samples to acquire the trained classification model, so that the performance of the acquired trained classification model can be greatly improved, the misreport rate of the classification model can be reduced, and the importance of the key feature can be enhanced, so as to improve the sensitivity of the classification model to the black samples and the detection rate of the classification model to malicious files.

In step S26, test samples are acquired.

After the trained classification model is acquired, the trained classification model is evaluated. Specifically, the test samples are first acquired, where the test samples may be to-be-classified PE files.

In step S27, the trained classification model is evaluated based on the test samples until a predetermined condition is met, to acquire a target classification model.

It is understood that after the test samples are acquired, the trained classification model is further evaluated based on the test samples until the predetermined condition is met, to acquire the target classification model. That is, the trained classification model is evaluated based on the test samples until the performance of the trained classification model cannot be improved further, and the target classification model is acquired.

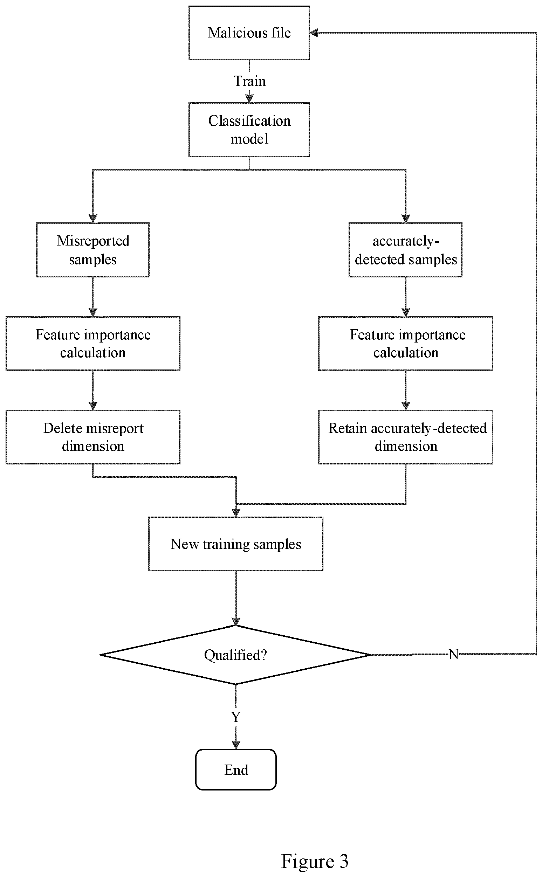

Reference is made to Figure 3, which is a flow chart of a method for compressing feature vector dimensionality. The method includes: acquiring malicious files; training a pre-constructed classification model based on the malicious files, to acquire the misreported samples and the accurately-detected samples; calculating importance of features in the misreported samples and the detection sample to acquire a misreport dimension and a accurately-detected dimension; deleting the misreport dimension and retaining the accurately-detected dimension to acquire new training samples; training the classification model with the new training samples; and evaluating whether the trained classification model is qualified. If the trained classification model is not qualified, additional malicious files are acquired. If the trained classification model is qualified, the procedure ends.

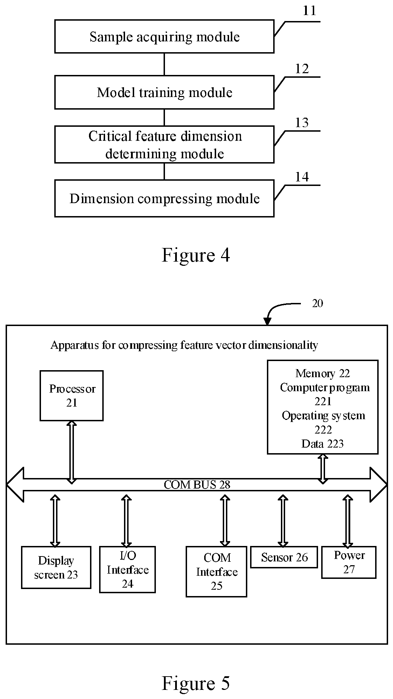

As shown in Figure 4, an apparatus for compressing feature vector dimensionality is provided according to an embodiment of the present disclosure. The apparatus includes a sample acquiring module 11, a model training module 12, a critical feature dimension determining module 13, and a dimension compressing module 14.

The sample acquiring module 11 is configured to acquire training samples.

The model training module 12 is configured to train a pre-constructed classification model based on the training samples to acquire misreported samples and accurately-detected samples.

The critical feature dimension determining module 13 is configured to determine a first critical feature dimension of the misreported samples and a second critical feature dimension of the accurately-detected samples.

The dimension compressing module 14 is configured to determine dimensionality-compressed training samples based on the first critical feature dimension, the second critical feature dimension and the training samples.

It can be seen that according to the present disclosure, the training samples are first acquired, the pre-constructed classification model is trained with the training samples to acquire the misreported samples and the accurately-detected samples, the first critical feature dimension of the misreported samples and the second critical feature dimension of the accurately-detected samples are determined, and then the dimensionality-compressed training samples are determined based on the first critical feature dimension, the second critical feature dimension and the training samples. It can be seen that according to the present disclosure, after the training samples are acquired, the pre-constructed classification model is trained with the training samples to acquire the misreported samples and the accurately-detected samples. The first critical feature dimension of the misreported samples and the second critical feature dimension of the accurately-detected samples are determined, and then the dimensionality-compressed training samples are determined based on the first critical feature dimension, the second critical feature dimension and the training samples, so that redundant features can be deleted, so as to improve feature vector processing speed. Moreover, after the interference features are deleted, the classification model is trained with the compressed feature vector, so that a misreport rate of the classification model can be reduced, and importance of a key feature can be improved, so as to improve the sensitivity of the classification model to black samples and detection rate of the classification model to malicious files. Further, the compressed feature vector has good interpretability, so as to reduce performance loss, thus improving the effect of the dimensionality reduction.

As shown in Figure 5, a device 20 for compressing feature vector dimensionality is further provided according to an embodiment of the present disclosure. The device 20 includes a processor 21 and a memory 22.

The memory 22 is configured to store a computer program. The processor 21 is configured to, when executing the computer program, implement the apparatus for compressing feature vector dimensionality and the method for compressing feature vector dimensionality described above.

The device 20 for compressing feature vector dimensionality includes but is not limited to a tablet computer, a laptop, a desktop computer, a server, a server cluster, or the like.

The processor 21 may include one or more processing cores, such as a 4-core processor and an 8-core processor. The processor 21 may be implemented in hardware with at least one of digital signal processing (DSP), field-programmable gate array (FPGA), and programmable logic array (PLA). The processor 21 may include a main processor and a coprocessor. The main processor is configured to process data in an awake state, and is referred to as a central processing unit (CPU). The coprocessor is a low-power processor for processing data in a standby state. In some embodiments, the processor 21 may be integrated with a graphics processing unit (GPU). The GPU is configured to render and draw images to be displayed on a display screen. In some embodiments, the processor 21 may include an artificial intelligence (AI) processor. The AI processor is configured to process computing operations related to machine learning.

The memory 22 may include one or more computer-readable storage media. The computer-readable storage media may be non-transient. The memory 22 may further include a high-speed random-access memory and a non-volatile memory, such as one or more magnetic disk storage devices and a flash storage device. In the embodiment, the memory 22 is configured to at least store the following computer program 221, where the computer program, when loaded and executed by the processor 21, implements the method for compressing feature vector dimensionality according to any one of the embodiments described above. In addition, the memory 32 may further store resources such as an operating system 222 and data 223, and the storage mode may be a temporary storage mode or a permanent storage mode. The operating system 222 may be Windows, Unix, Linux, and the like. The data 223 may include various data.

In some embodiments, the device 20 for compressing feature vector dimensionality may further include a display screen 23, an input/output interface 24, a communication interface 25, a sensor 26, a power supply 27, and a communication bus 28.

Those skilled in the art may understand that the structure shown in Figure 5 does not constitute a limitation on the device 20 for compressing feature vector dimensionality, and the device may include more or fewer components than components shown in the Figure 5.

Further, a computer-readable storage medium is further provided according to an embodiment of the present disclosure. The computer-readable storage medium stores a computer program, where the computer program, when executed by a processor, implements the method for compressing feature vector dimensionality according to any one of the embodiments described above.

For details of the method for compressing feature vector dimensionality described above, reference may be made to the corresponding content in the embodiments described above, which is not repeated herein.

The embodiments in this specification are described in a progressive way, each of which emphasizes the differences from others, and the same or similar parts among the embodiments may be referred to each other. Since the device disclosed in the embodiments corresponds to the method therein, the description thereof is relatively simple, and for relevant matters references may be made to the description of the method.

The steps of the method or algorithm described in conjunction with the embodiments of the present disclosure may be directly implemented by hardware, a software module executed by a processor, or a combination thereof. The software module may be stored in a random-access memory (ROM), a memory, a read-only memory (ROM), an electrically programmable ROM, an electrically erasable programmable ROM, a register, a hard disk, a removable magnetic disk, a CD-ROM, or any other forms of storage medium well known in the art.

Finally, it should be further noted that the relationship terminologies such as "first" and "second" are only used herein to distinguish one entity or operation from another entity or operation, rather than to necessitate or imply that the actual relationship or order exists between the entities or operations. Moreover, terms of "include", "comprise" or any other variants thereof are intended to be non-exclusive. Therefore, a process, method, article or device including a series of elements includes not only the elements but also other elements that are not explicitly listed, or also includes the elements inherent for the process, method, article or device. Unless expressively limited otherwise, the statement "comprising (including) one..." does not exclude the case that other similar elements may exist in the process, method, article or device.

The method, the apparatus and the device for compressing feature vector dimensionality, and a medium are described in detail according to the present disclosure. Specific examples are used herein to illustrate the principle and implementation of the present disclosure. The description of the above embodiments is only used to help understanding the method and core idea of the present disclosure. Those skilled in the art may make variations to the embodiments and the application scope based on the idea of the present disclosure. In summary, the content of the description should not be construed as a limitation to the present disclosure.

**Claims**

1. A method for compressing feature vector dimensionality, comprising:

   acquiring training samples;
   training a pre-constructed classification model with the training samples, to acquire misreported samples and accurately-detected samples;
   determining a first critical feature dimension of the misreported samples and a second critical feature dimension of the accurately-detected samples; and
   determining dimensionality-compressed training samples based on the first critical feature dimension, the second critical feature dimension and the training samples.

2. The method for compressing feature vector dimensionality according to claim 1, wherein the determining dimensionality-compressed training samples based on the first critical feature dimension, the second critical feature dimension and the training samples comprises:
   deleting data of the first critical feature dimension from the training samples, and retaining data of the second critical feature dimension, to acquire the dimensionality-compressed training samples.

3. The method for compressing feature vector dimensionality according to claim 1, wherein the determining a first critical feature dimension of the misreported samples comprises:

   determining a target critical parameter of each feature dimension of the misreported samples according to a predetermined equation, wherein the target critical parameter is used to indicate an importance of each feature dimension to a whole of the misreported samples; and
   determining the first critical feature dimension of the misreported samples based on target critical parameters.

4. The method for compressing feature vector dimensionality according to claim 3, wherein the determining a target critical parameter of each feature dimension of the misreported samples according to a predetermined equation comprises:

determining a local critical parameter of each feature dimension for each of the misreported samples according to a first predetermined equation, wherein the local critical parameter is used to indicate an importance of each feature dimension to a current sample, and the first predetermined equation is expressed as:

$$f_{m,i} = \sum split(i)$$

where $f_{m,i}$ represents a local critical parameter of an $i$-th feature dimension in an $m$-th sample, and $\sum split(i)$ represents the number of times that the $i$-th feature dimension in the $m$-th sample is used to separate a decision tree; and determining the target critical parameter of each feature dimension of the misreported samples according to a second predetermined equation and local critical parameters, wherein the second predetermined equation is expressed as:

$$F_i = \frac{\sum_{m=1}^{N} f_{m,i}}{N}$$

where $F_i$ represents a target critical parameter of the $i$-th feature dimension of the misreported samples, and $N$ represents the number of the misreported samples.

5. The method for compressing feature vector dimensionality according to claim 3, wherein the determining the first critical feature dimension of the misreported samples based on the target critical parameters comprises:

comparing the target critical parameter of each feature dimension of the misreported samples with a predetermined critical parameter threshold; and determining a current feature dimension as the first critical feature dimension, in a case that the target critical parameter of the current feature dimension is greater than or equal to the predetermined critical parameter threshold.

6. The method for compressing feature vector dimensionality according to claim 1, wherein after the determining dimensionality-compressed training samples based on the first critical feature dimension, the second critical feature dimension and the training samples, the method further comprises: training the classification model based on the dimensionality-compressed training samples to acquire a trained classification model.

7. The method for compressing feature vector dimensionality according to claim 6, wherein after the training the classification model based on the dimensionality-compressed training samples to acquire a trained classification model, the method further comprises:

acquiring test samples; and evaluating the trained classification model based on the test samples until a predetermined condition is met, to acquire a target classification model.

8. An apparatus for compressing feature vector dimensionality, comprising:

a sample acquiring module, configured to acquire training samples; a model training module, configured to train a pre-constructed classification model based on the training samples to acquire misreported samples and accurately-detected samples; a critical feature dimension determining module, configured to determine a first critical feature dimension of the misreported samples and a second critical feature dimension of the accurately-detected samples; and a dimension compressing module, configured to determine dimensionality-compressed training samples based on the first critical feature dimension, the second critical feature dimension and the training samples.

9. A device for compressing feature vector dimensionality, comprising a processor and a memory, wherein

the memory is configured to store a computer program; and the processor is configured to, when executing the computer program, implement the method for compressing feature vector dimensionality according to any one of claims 1 to 7.

10. A computer-readable storage medium, storing a computer program, wherein the computer program, when executed by a processor, implements the method for compressing feature vector dimensionality according to any one of claims 1 to 7.

| Acquire training samples | S11 |

↓

| Train a pre-constructed classification model with the training samples, to acquire misreported samples and accurately-detected samples | S12 |

↓

| Determine a first critical feature dimension of the misreported samples and a second critical feature dimension of the accurately-detected samples | S13 |

↓

| Determine dimensionality-compressed training samples based on the first critical feature dimension, the second critical feature dimension and the training samples | S14 |

Figure 1

| Acquire training samples | S21 |

| Train a pre-constructed classification model with the training samples, to acquire misreported samples and accurately-detected samples | S22 |

| Determine a first critical feature dimension of the misreported samples and a second critical feature dimension of the accurately-detected samples | S23 |

| Delete data on the first critical feature dimension from the training samples, and retain data on the second critical feature dimension to acquire the dimensionality-compressed training samples | S24 |

| Train the classification model with the dimensionality-compressed training samples to acquire a trained classification model | S25 |

| Acquire test samples | S26 |

| Evaluate the trained classification model based on the test samples until a predetermined condition is met, to acquire a target classification model | S27 |

Figure 2

Figure 3

| Sample acquiring module | 11 |

| Model training module | 12 |

| Critical feature dimension determining module | 13 |

| Dimension compressing module | 14 |

Figure 4

20

Apparatus for compressing feature vector dimensionality

| Processor 21 |

Memory 22
Computer program 221
Operating system 222
Data 223

COM BUS 28

| Display screen 23 | I/O Interface 24 | COM Interface 25 | Sensor 26 | Power 27 |

Figure 5

## INTERNATIONAL SEARCH REPORT

| | International application No. |
|---|---|
| | **PCT/CN2021/081443** |

| A. | CLASSIFICATION OF SUBJECT MATTER |
|---|---|

G06K 9/26(2006.01)i

According to International Patent Classification (IPC) or to both national classification and IPC

| B. | FIELDS SEARCHED |
|---|---|

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT: 模型, 维度, 降, 样本, model, dimension, reducing, sampling

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 109934167 A (XI'AN JIAOTONG UNIVERSITY) 25 June 2019 (2019-06-25) description, paragraphs 7-67, figure 1 | 1-10 |
| A | CN 103544499 A (JIANGNAN UNIVERSITY et al.) 29 January 2014 (2014-01-29) description, paragraphs 5-19 | 1-10 |
| A | CN 102682300 A (TONGJI UNIVERSITY) 19 September 2012 (2012-09-19) entire document | 1-10 |
| A | CN 101464907 A (INSTITUTE OF COMPUTING TECHNOLOGY, CHINESE ACADEMY OF SCIENCES) 24 June 2009 (2009-06-24) entire document | 1-10 |
| A | US 2018150724 A1 (CYLANCE INC) 31 May 2018 (2018-05-31) entire document | 1-10 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 May 2021** | **23 June 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/081443**

| Patent document cited in search report | | | Publication date (day/month/year) | Patent family member(s) | | | Publication date (day/month/year) |
|---|---|---|---|---|---|---|---|
| CN | 109934167 | A | 25 June 2019 | None | | | |
| CN | 103544499 | A | 29 January 2014 | CN | 103544499 | B | 05 April 2017 |
| CN | 102682300 | A | 19 September 2012 | None | | | |
| CN | 101464907 | A | 24 June 2009 | CN | 101464907 | B | 11 May 2011 |
| US | 2018150724 | A1 | 31 May 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010495612